# EUROPEAN PATENT SPECIFICATION

(11) **EP 2 539 955 B1**
(45) Date of publication and mention of the grant of the patent: **11.10.2017**
(21) Application number: 11706921.1
(22) Date of filing: 23.02.2011
(51) Int. Cl.: C25B 13/00, H01M 8/1044, H01M 8/1053, H01M 8/106, H01M 8/1097, H01M 8/0289, H01M 8/1062, H01M 8/1065, H01M 8/1018

(54) **MEMBRANE**
MEMBRAN
MEMBRANE

(30) Priority: 26.02.2010 GB 201003230
(43) Date of publication of application: 02.01.2013
(73) Proprietor: Johnson Matthey Fuel Cells Limited, London EC4A 4AB (GB)
(72) Inventor: SHARMAN, Jonathan David Brereton, Reading Berkshire RG4 9JR (GB); PETCH, Michael Ian, Reading Berkshire RG5 3PB (GB)
(74) Representative: Swift, Jane Elizabeth Berrisford
(86) International application number: PCT/GB2011/050353
(87) International publication number: WO 2011/104542

(56) References cited:
- JP-A- 61 024 160
- US-A1- 2005 250 004
- US-A1- 2007 281 196

## Description

The present invention relates to a reinforced membrane, and in particular to a reinforced membrane suitable for use in a fuel cell or an electrolyser.

A fuel cell is an electrochemical cell comprising two electrodes separated by an electrolyte. A fuel, such as hydrogen or an alcohol, such as methanol or ethanol, is supplied to the anode and an oxidant, such as oxygen or air, is supplied to the cathode. Electrochemical reactions occur at the electrodes, and the chemical energy of the fuel and the oxidant is converted to electrical energy and heat. Electrocatalysts are used to promote the electrochemical oxidation of the fuel at the anode and the electrochemical reduction of oxygen at the cathode.

In proton exchange membrane (PEM) fuel cells, the electrolyte is a solid polymeric membrane. The membrane is electronically insulating but ionically conducting. In the PEM fuel cell the membrane is proton conducting, and protons, produced at the anode, are transported across the membrane to the cathode, where they combine with oxygen to form water.

The principle component of a PEM fuel cell is known as a membrane electrode assembly (MEA) and is essentially composed of five layers. The central layer is the polymeric ion-conducting membrane. On either side of the ion-conducting membrane there is an electrocatalyst layer, containing an electrocatalyst designed for the specific electrocatalytic reaction. Finally, adjacent to each electrocatalyst layer there is a gas diffusion layer. The gas diffusion layer must allow the reactants to reach the electrocatalyst layer and must conduct the electric current that is generated by the electrochemical reactions. Therefore the gas diffusion layer must be porous and electrically conducting.

Conventionally, the MEA can be constructed by a number of methods outlined hereinafter:
(i) The electrocatalyst layer may be applied to the gas diffusion layer to form a gas diffusion electrode. Two gas diffusion electrodes can be placed either side of an ion-conducting membrane and laminated together to form the five-layer MEA;
(ii) The electrocatalyst layer may be applied to both faces of the ion-conducting membrane to form a catalyst-coated ion-conducting membrane. Subsequently, gas diffusion layers are applied to both faces of the catalyst-coated ion-conducting membrane.
(iii) An MEA can be formed from an ion-conducting membrane coated on one side with an electrocatalyst layer, a gas diffusion layer adjacent to that electrocatalyst layer, and a gas diffusion electrode on the other side of the ion-conducting membrane.

Typically tens or hundreds of MEAs are required to provide enough power for most applications, so multiple MEAs are assembled to make up a fuel cell stack. Field flow plates are used to separate the MEAs. The plates perform several functions: supplying the reactants to the MEAs; removing products; providing electrical connections; and providing physical support.

Conventional ion-conducting membranes used in the PEM fuel cell are generally formed from sulphonated fully-fluorinated polymeric materials (often generically referred to as perfluorinated sulphonic acid (PFSA) ionomers). Membranes formed from these ionomers are sold under the trade names Nafion^{®} (e.g. NR211 or NR212 from E.I. DuPont de Nemours and Co.), Aciplex™ (Asahi Kasei) and Flemion^{®} (Asahi Glass KK). Other fluorinated-type membranes include those sold under the trade name Fumapem^{®} F (e.g. F-930 or F-1030 from FuMA-Tech GmbH), Aquivion™ from Solvay Solexis S.p.A and the GEFC-10N series from Golden Energy Fuel Cell Co., Ltd.

As an alternative to perfluorinated, and partly-fluorinated, polymer based ion-conducting membranes it is possible to use ion-conducting membranes based on non-fluorinated sulfonated or phosphonated hydrocarbon polymers, and in particular polyarylene polymers. Such commercially available polymers include Udel^{®} polyarylenesulfone (PSU) and Veradel^{®} polyarylene ether sulphone (PES) from Solvay Advanced Polymers, and Victrex^{®} polyarylene ether ether ketone (PEEK™) from Victrex plc. Hydrocarbon polymer based membranes are also described, such as the Fumapem^{®} P, E and K types from FuMA-Tech GmbH., JHY and JEM membranes from JSR Corporation, SPN polymer from Toyobo Co., Ltd., and developmental membranes from Toray Industries Inc.

In PEM fuel cells designed to operate at higher temperatures (e.g. 150°C to 190°C), the membrane may be a polymer such as polybenzimidazole, or polymer matrix, impregnated with phosphoric acid. Examples of MEAs made from such membranes include the Celtec^{®}-P series from BASF Fuel Cell GmbH. Other MEAs include the Advent TPS^{®} series based on aromatic polyether polymers incorporating pyridine type structures, also impregnated with phosphoric acid from Advent Technologies S.A. Polybenzazole polymers can also be used such as aryl or alkyl substituted polybenzimidazole (e.g. polybenzimidazole-N-benzylsulfonate), polybenzoxazoles and polybenzothiazoles.

The PFSA or hydrocarbon based ion-conducting membrane may contain a reinforcement, typically wholly embedded within the membrane, to provide improved mechanical properties such as increased tear resistance and reduced dimensional change on hydration and dehydration. Examples of reinforcements used include webs having a node and fibril structure, often formed by inverse phase segregation and subsequent stretching, electrospun webs and non-woven fibre webs. The preferred reinforcement may be based on, but not exclusively, a porous web or fibres of a fluoropolymer such as polytetrafluoroethylene (PTFE), as described in US 6,254,978, EP 0814897 and US 6,110,330, or polyvinylidene fluoride (PVDF), or alternative materials-such as PEEK or polyethylene.

However, although the reinforced membranes that are currently available do improve the durability, or operating lifetime, when used in a MEA, compared to the lifetimes that are achievable in MEAs using a non-reinforced membrane, there is still the need to improve further the durability of the MEA for many applications. Pin-holes in the membrane can easily be formed during operation and, in the state-of-the-art reinforced membranes, these pin-holes can propagate (expand) in the in-plane (x- and y-) directions, albeit in a more tortuous path than in un-reinforced membranes, and lead to failure of the membrane and membrane electrode assembly. Furthermore, the state-of-the-art membranes lack resistance to compressibility in the z-plane direction, which can again lead to deformation and subsequent failure due to the compressive stresses experienced in an operating stack. State of the art reinforced membranes are also vulnerable to expansion and contraction during wet-dry cycling, which exacerbates failure mechanisms at thin or weak points in the membrane. The thinner the membrane, the more pronounced these problems are.

US2007/0281196 discloses a base as a support in a fuel cell, the base provided with a plurality of through holes. An electrolyte membrane covers the entirety of the base facing the anode and is partly embedded in the plurality of through holes.

US2005/0250004 discloses unit cell structures formed on a substrate. The substrate is penetrated by an opening filled with ion-conducting material.

It is the object of the present invention to provide an improved reinforced membrane, in particular a membrane for a fuel cell, which is more durable and overcomes the problems of the state-of-the-art membranes.

Accordingly, a first aspect of the invention provides a reinforced membrane, suitably for use in a fuel cell, said reinforced membrane comprising:
(i) a planar reinforcing component made from metal, carbon, polymer or a composite thereof, and
(ii) an ion-conducting material,
characterised in that the planar reinforcing component is a cellular structure, comprising a plurality of discrete cells, wherein the wall of each cell extends through the thickness of the component such that the cell wall is impermeable to the ion-conducting material and wherein the ion-conducting material fills the cells of the planar reinforcing component.

The planar reinforcing component is a porous material having cells that extend through the thickness thereof (z-direction) such that there is no inter-connection from one cell to another cell. By this, we mean that there is no transfer of proton-conducting material between the cells. However, in some embodiments, it is envisaged that the walls or struts of the cells will also be porous, on a fine scale. These pores in the cell walls are fine enough not to allow penetration by the proton-conducting material, but are hydrophilic enough to allow water to fill the pores. Thus, in suitable fuel cells, where liquid water is present, these pores can move water through the thickness or through the plane of the reinforcement.

The cells may be regular or irregular in shape, and suitably each individual cell has a cross-sectional diameter of from 10nm to 1.0mm. The cells may all be of essentially similar size or there may be a range of sizes. In a preferred embodiment, the planar reinforcing component is a honeycomb structure. The dimension of the planar reinforcing component in the z-direction may be from 1 µm to 500 µm, and suitably from 10 µm to 200 µm. Exact dimensions will depend on the final structure and the use to which the reinforced membrane is put. Determination of the dimensions in the z-direction is well within the capabilities of the skilled person.

The porosity of the planar reinforcing component is suitably greater than 30%, preferably greater than 50% and most preferably greater than 70%. The porosity (n) is calculated according to the formula n = Vᵥ / Vₜ x 100, wherein n is the porosity, Vᵥ is the voids volume and Vₜ is the total volume of the planar reinforcing component. The voids volume and total volume of the planar reinforcing component can be determined by methods known to those skilled in the art.

Examples of planar reinforcing components having a cellular structure include those made by extrusion and slicing or by partial lamination of strips and subsequent expansion under tension (such as Nomex^{®} or Tyvec^{®} from DuPont) or other means, woven meshes that are subsequently calendered, meshes made by cutting slits in continuous sheets and applying tensile stress to form expanded meshes, planar sheets with holes punched or cut (e.g. by laser) through the thickness of the sheet, and porous sheets made by casting material into a mould. Suitably, the planar reinforcing components include those made by extrusion and slicing or by partial lamination of strips and subsequent expansion under tension or other means, woven meshes that are subsequently calendered, meshes made by cutting slits in continuous sheets and applying tensile stress to form expanded meshes and porous sheets made by casting material into a mould.

The planar reinforcing component may be fabricated from any material that will provide the required reinforcement of the membrane. Examples of suitable material from which the reinforcing component is made are metal, carbon, polymer or composites thereof. In many embodiments it is desirable for the material to be an electrical insulator, but in others it should be a weak electrical conductor and in some cases it does not matter if the material conducts or not. Preferably the material is stable in the fuel cell environment and able to form a bond with any ion-conducting material used to fill the reinforcement cells. The material from which the planar reinforcing component is made may also have some intrinsic ion-conducting properties, for example it could be made from a high equivalent weight version of a PFSA polymer.

The ion-conducting material may be a solid or a liquid. In one embodiment, the ion-conducting material is a solid, such as a proton-conducting polymer or an anion-conducting polymer, such as a hydroxyl anion-conducting polymer. Examples of suitable proton-conducting polymers include perfluorosulphonic acid ionomers (e.g. Nafion^{®} (E.I. DuPont de Nemours and Co.), Aciplex^{®} (Asahi Kasei), Aquivion™ (Solvay Solexis SpA), Flemion^{®} (Asahi Glass Co.), Fumion^{®} F-series (FuMA-Tech GmbH)), or ionomers made from hydrocarbon polymers (e.g. Fumion^{®} P-series based on polyarylene sulphonic acid (FuMA-Tech GmbH) or phosphoric acid impregnated polybenzimidazole (e.g. by dissolving PBI in dimethylacetamide and adding phosphoric acid to impregnate the PBI). Examples of suitable anion-conducting polymers include A901 made by Tokuyama Corporation and Fumasep FAA from FuMA-Tech GmbH.

In a second embodiment of the invention, the ion-conducting material is a liquid, such as a proton-conducting liquid or an anion-conducting liquid, such as a hydroxyl anion-conducting liquid which is held and retained in the pores of the planar reinforcing component, to form the reinforced membrane, by capillary forces. Examples of suitable proton-conducting liquids include phosphoric acid and sulphuric acid. Examples of anion-conducting liquids include potassium hydroxide solution, sodium hydroxide solution.

In the reinforced membrane of the invention, some of the cells of the planar reinforcing component are filled with the ion-conducting material. In one embodiment not of the invention, all the cells are filled with ion-conducting material, such that the planar reinforcing component is completely filled with ion-conducting material. In the reinforced membrane of the invention, the cells around the edge of the planar reinforcing component are not filled with ion-conducting material, such that there is a region around the periphery of the planar reinforcing component ('first edge region') in which no ion-conducting material is present.

In a further aspect of the invention, when the ion-conducting material is a solid ion-conducting material, the solid ion-conducting material extends beyond the filled cells in the z-direction, such that there is a layer of un-reinforced solid ion-conducting material on one or both faces of the planar reinforcing component. Again, there is a first edge region in which no solid ion-conducting material is present.

When the ion-conducting material is a solid, it can be applied to the planar reinforcing component, as a dispersion in a suitable liquid, by any technique known in the art, for example screen printing, rotary screen printing, inkjet printing, spraying, painting, immersion or dipping, bar coating, pad coating, gravure, gap coating techniques such as knife or doctor blade over roll (whereby the coating is applied to the substrate then passes through a split between the knife and a support roller), slot die (slot, extrusion) coating (whereby the coating is squeezed out by gravity or under pressure via a slot onto the substrate), metering rod application such as with a Meyer bar and gravure coating. Suitably, the filled reinforcing component is dried to remove the liquid and form the solid ion-conducting material.

When the ion-conducting material is a liquid, it can be applied to the planar reinforcing component by any techniques known in the art, for example screen printing, rotary screen printing, inkjet printing, spraying, painting, immersion or dipping, bar coating, pad coating, gravure, gap coating techniques such as knife or doctor blade over roll (whereby the coating is applied to the substrate then passes through a split between the knife and a support roller), slot die (slot, extrusion) coating (whereby the coating is squeezed out by gravity or under pressure via a slot onto the substrate), metering rod application such as with a Meyer bar and gravure coating.

The reinforced membrane of the invention may be used in any electrochemical device requiring an ion-conducting membrane. Accordingly, a further aspect of the invention provides an electrochemical device comprising a reinforced membrane as hereinbefore described. Alternatively, there is provided the use of a reinforced membrane as hereinbefore described in an electrochemical device. In a preferred embodiment of the invention, the reinforced membrane is used in a fuel cell. In a further preferred embodiment of the invention, the reinforced membrane is used in an electrolyser. Thus further aspects of the invention provide components of a fuel cell or an electrolyser, wherein the components comprise a reinforced membrane of the invention.

Accordingly, the present invention further provides a catalyst-coated reinforced membrane comprising a reinforced membrane according to the invention and an electrocatalyst layer deposited on at least one side of the reinforced membrane. In one embodiment, the catalyst-coated reinforced membrane has an electrocatalyst layer deposited on both sides of the reinforced membrane.

The electrocatalyst layer comprises an electrocatalyst, which may be a finely divided unsupported metal powder, or may be a supported catalyst wherein small metal particles are dispersed on electrically conducting particulate carbon supports. The electrocatalyst metal is suitably selected from
(i) the platinum group metals (platinum, palladium, rhodium, ruthenium, iridium and osmium),
(ii) gold or silver,
(iii) a base metal,
or an alloy or mixture comprising one or more of these metals or their oxides. The preferred electrocatalyst metal is platinum, which may be alloyed with other precious metals or base metals. If the electrocatalyst is a supported catalyst, the loading of metal particles on the carbon support material is suitably in the range 10-90wt%, preferably 15-75wt% of the weight of resulting electrocatalyst.

The electrocatalyst layer may suitably comprise other components, such as ion-conducting polymer, which is included to improve the ionic conductivity within the layer.

A still further aspect of the invention provides a MEA comprising a reinforced membrane or a catalyst-coated reinforced membrane as hereinbefore described. The MEA may be made up in a number of ways including, but not limited to:
(i) a reinforced membrane of the invention may be sandwiched between two gas diffusion electrodes (one anode and one cathode);
(ii) a catalyst-coated reinforced membrane of the invention coated on one side only by an electrocatalyst layer may be sandwiched between a gas diffusion layer and a gas diffusion electrode, the gas diffusion layer contacting the side of the reinforced membrane coated with the catalyst layer or;
(iii) a catalyst-coated reinforced membrane of the invention coated on both sides with an electrocatalyst layer may be sandwiched between two gas diffusion layers.

The anode and cathode gas diffusion layers are suitably based on conventional gas diffusion substrates. Typical substrates include non-woven papers or webs comprising a network of carbon fibres and a thermoset resin binder (e.g. the TGP-H series of carbon fibre paper available from Toray Industries Inc., Japan or the H2315 series available from Freudenberg FCCT KG, Germany, or the Sigracet^{®} series available from SGL Technologies GmbH, Germany or AvCarb^{®} series from Ballard Power Systems Inc, or woven carbon cloths. The carbon paper, web or cloth may be provided with a further treatment prior to being incorporated into a MEA either to make it more wettable (hydrophilic) or more wet-proofed (hydrophobic). The nature of any treatments will depend on the type of fuel cell and the operating conditions that will be used. The substrate can be made more wettable by incorporation of materials such as amorphous carbon blacks via impregnation from liquid suspensions, or can be made more hydrophobic by impregnating the pore structure of the substrate with a colloidal suspension of a polymer such as PTFE or polyfluoroethylenepropylene (FEP), followed by drying and heating above the melting point of the polymer. For applications such as the PEMFC, a microporous layer may also be applied to the gas diffusion substrate on the face that will contact the electrocatalyst layer. The microporous layer typically comprises a mixture of a carbon black and a polymer such as polytetrafluoroethylene (PTFE).

The MEA may further comprise components that seal and/or reinforce the edge regions of the MEA for example as described in WO2005/020356. The MEA is assembled by conventional methods known to those skilled in the art.

The reinforced membrane, catalyst-coated reinforced membrane or MEA of the invention may further comprise an additive. The additive may be present internally within the reinforced membrane, catalyst-coated reinforced membrane or MEA or in the case of the catalyst-coated reinforced membrane or MEA, may be present at one or more of the interfaces between the various layers and/or within one or more of the layers.

The additive may be one or more selected from the group consisting of hydrogen peroxide decomposition catalysts, radical scavengers, free radical decomposition catalyst, self regenerating antioxidant, hydrogen donors (H-donor) primary antioxidant, free radical scavenger secondary antioxidant, oxygen absorbers (oxygen scavenger). Examples of these different additives may be found in WO2009/040571 and WO2009/109780. A preferred additive is cerium dioxide (ceria).

A yet further aspect of the invention provides a fuel cell comprising a reinforced membrane, a catalyst-coated reinforced membrane or a MEA as hereinbefore described. In a preferred embodiment of the invention, the fuel cell or electrolyser is a PEM fuel cell or PEM electrolyser.

A benefit of the reinforced membrane of the invention is that it is flexible, yet also provides the durability required by such membranes. The flexibility allows the reinforced membrane and components comprising the reinforced membrane to be manufactured using a reel-to-reel process; such a process could not be used for reinforced membranes wherein the reinforcing component is rigid and inflexible.

Whilst the invention has been described primarily with reference to PEM fuel cells, the invention could equally well be used, with no or little modification, in other types of fuel cell or electrochemical device. For example, in phosphoric acid fuel cells (PAFCs) the two electrodes are conventionally separated by a matrix of particulate material, such as silicon carbide bound with polyether sulphone which has a porosity of greater than 38% (P. Stonehart and D. Wheeler, Modern Aspects of Electrochemistry, Number 38, edited by B.E. Conway et al, Kluwer Academic/Plenum Publishers, New York, 2005, p.400 et seq). The present invention allows the matrix to be replaced by the planar reinforcing component, impregnated with phosphoric acid, provided a material of suitable resistance to hot phosphoric acid and wettable by phosphoric acid is used.

In alkaline fuel cells the electrolyte is typically strong sodium or potassium hydroxide and the electrodes are separated by a matrix in a similar manner to that described for PAFCs. The present invention is quite suitable for MEAs for use in alkaline fuel cells provided the planar reinforcing component is stable in and wetted by the alkaline electrolyte.

All of the embodiments described for PEM fuel cells apply equally to MEAs for PEM electrolysers. In these PEM electrolysers, a voltage is applied across the membrane electrode assemblies such that water supplied to the device is split into hydrogen and oxygen, at the cathode and anode respectively. The MEAs may require different catalyst components to a PEM fuel cell, such as Ir and Ru based materials at the anode, but are otherwise very similar to MEAs used for fuel cells.

The invention will now be illustrated further with reference to the following example.

A PEEK (Polyetheretherketone) woven mesh (SEFAR^{®} PEEKTEX) from Sefar AG, which had been calendered to give a cellular structure, was placed between two Nafion^{®} N117 membranes from DuPont. The Nafion^{®} 117 / PEEK sandwich was placed between a PTFE sheet, a pressing cushion and a titanium plate. The Nafion^{®} 117 / PEEK sandwich was laminated as 177°C at 1600psi for five minutes and was allowed to cool under pressure. Before pressing, the structure was checked for air bubbles, wrinkles and alignment. The reinforced membrane formed was removed from the titanium plates, pressing cushions and PTFE sheets and the edges cut.

## Claims

1. A reinforced membrane, said reinforced membrane comprising:
(i) a planar reinforcing component made from metal, carbon, polymer or a composite thereof, and
(ii) an ion-conducting material which is a liquid or solid proton-conducting polymer or a liquid or solid anion-conducting polymer, wherein the planar reinforcing component is a cellular structure, comprising a plurality of discrete cells, wherein the wall of each cell extends through the thickness of the component such that the cell wall is impermeable to the ion-conducting material and **characterised in that** some of the cells of the planar reinforcing material are filled with the ion-conducting material and wherein the cells around the edge of the planar reinforcing component are not filled with ion-conducting material, such that there is a region around the periphery of the planar reinforcing component in which no ion-conducting material is present.

2. A reinforced membrane according to claim 1, wherein the planar reinforcing component is of a honeycomb structure.

3. A reinforced membrane according to claim 1 or claim 2, wherein the porosity of the planar reinforcing component is greater than 30%.

4. A reinforced membrane according to any one of claims 1 to 3, wherein the ion-conducting material is a solid.

5. A reinforced membrane according to claim 4, wherein the solid ion-conducting material extend beyond the filled cells in the z-direction, such that there is a layer of un-reinforced solid ion-conducting material on one or both faces of the planar reinforcing component.

6. A reinforced membrane according to any one of claims 1 to 3, wherein the ion-conducting material is a liquid.

7. A catalyst-coated reinforced membrane comprising a reinforced membrane according to any one of claims 1 to 6 and an electrocatalyst layer deposited on at least one side of the reinforced membrane.

8. A membrane electrode assembly comprising a reinforced membrane according to any one of claims 1 to 6.

9. A membrane electrode assembly comprising a catalyst-coated reinforced membrane according to claim 7.

10. A fuel cell comprising a reinforced membrane according to any one of claims 1 to 6, a catalyst-coated reinforced membrane according to claim 7 or a membrane electrode assembly according to any one of claims 8 and 9.

11. An electrolyser comprising a reinforced membrane according to any one of claims 1 to 6, a catalyst-coated reinforced membrane according to claim 7 or a membrane electrode assembly according to any one of claims 8 and 9.

## Patentansprüche

1. Verstärkte Membran, wobei die verstärkte Membran Folgendes umfasst:
(i) eine ebene Verstärkungskomponente, die aus Metall, Kohlenstoff, Polymer oder einem Verbundwerkstoff davon hergestellt ist, und
(ii) ein ionenleitendes Material, das ein flüssiges oder festes protonenleitendes Polymer oder ein flüssiges oder festes anionenleitendes Polymer ist,
wobei die ebene Verstärkungskomponente eine zellförmige Struktur ist, die mehrere separate Zellen umfasst, wobei die Wand jeder Zelle sich durch die Dicke der Komponente erstreckt, so dass die Zellwand für das ionenleitende Material undurchlässig ist, und **dadurch gekennzeichnet, dass** einige der Zellen des ebenen Verstärkungsmaterials mit dem ionenleitenden Material gefüllt sind und wobei die Zellen um den Rand der ebenen Verstärkungskomponente nicht mit ionenleitendem Material gefüllt sind, so dass es eine Region um den Umfang der ebenen Verstärkungskomponente gibt, in der kein ionenleitendes Material vorhanden ist.

2. Verstärkte Membran nach Anspruch 1, wobei die ebene Verstärkungskomponente eine Wabenstruktur aufweist.

3. Verstärkte Membran nach Anspruch 1 oder 2, wobei die Porosität der ebenen Verstärkungskomponente größer als 30 % ist.

4. Verstärkte Membran nach einem der Ansprüche 1 bis 3, wobei das ionenleitende Material ein Feststoff ist.

5. Verstärkte Membran nach Anspruch 4, wobei das feste ionenleitende Material sich über die gefüllten Zellen hinaus in der z-Richtung erstreckt, so dass es eine Schicht von unverstärktem festem ionenleitendem Material auf einer oder beiden Flächen der ebenen Verstärkungskomponente gibt.

6. Verstärkte Membran nach einem der Ansprüche 1 bis 3, wobei das ionenleitende Material eine Flüssigkeit ist.

7. Katalysatorbeschichtete verstärkte Membran, die eine verstärkte Membran nach einem der Ansprüche 1 bis 6 und eine Elektrokatalysatorschicht, die auf mindestens einer Seite der verstärkten Membran abgeschieden ist, umfasst.

8. Membran-Elektroden-Einheit, die eine verstärkte Membran nach einem der Ansprüche 1 bis 6 umfasst.

9. Membran-Elektroden-Einheit, die eine katalysatorbeschichtete verstärkte Membran nach Anspruch 7 umfasst.

10. Brennstoffzelle, die eine verstärkte Membran nach einem der Ansprüche 1 bis 6, eine katalysatorbeschichtete verstärkte Membran nach Anspruch 7 oder eine Membran-Elektroden-Einheit nach einem der Ansprüche 8 und 9 umfasst.

11. Elektrolyseur, der eine verstärkte Membran nach einem der Ansprüche 1 bis 6, eine katalysatorbeschichtete verstärkte Membran nach Anspruch 7 oder eine Membran-Elektroden-Einheit nach einem der Ansprüche 8 und 9 umfasst.

## Revendications

1. Membrane renforcée, ladite membrane renforcée comprenant :
(i) un élément de renforcement plan en métal, en carbone, en polymère ou en un composite de ceux-ci et
(ii) un matériau conducteur d'ions qui est un polymère liquide ou solide conducteur de protons ou un polymère liquide ou solide conducteur d'anions,
l'élément de renforcement plan étant une structure cellulaire, comprenant une pluralité de cellules discrètes, la paroi de chaque cellule s'étendant à travers l'épaisseur de l'élément de manière telle que la paroi cellulaire est imperméable au matériau conducteur d'ions et **caractérisée en ce que** certaines des cellules du matériau de renforcement plan sont remplies par le matériau conducteur d'ions et les cellules autour du bord de l'élément de renforcement plan n'étant pas remplies par le matériau conducteur d'ions, de manière telle qu'il existe une région autour de la périphérie de l'élément de renforcement plan dans laquelle il n'y a pas de matériau conducteur d'ions.

2. Membrane renforcée selon la revendication 1, l'élément de renforcement plan étant une structure en nid d'abeille.

3. Membrane renforcée selon la revendication 1 ou la revendication 2, la porosité de l'élément de renforcement plan étant supérieure à 30%.

4. Membrane renforcée selon l'une quelconque des revendications 1 à 3, le matériau conducteur d'ions étant un solide.

5. Membrane renforcée selon la revendication 4, le matériau solide conducteur d'ions s'étendant au-delà des cellules remplies dans la direction z, de manière telle qu'il existe une couche de matériau solide conducteur d'ions non renforcé sur une ou les deux faces de l'élément de renforcement plan.

6. Membrane renforcée selon l'une quelconque des revendications 1 à 3, le matériau conducteur d'ions étant un liquide.

7. Membrane renforcée revêtue d'un catalyseur comprenant une membrane renforcée selon l'une quelconque des revendications 1 à 6 et une couche d'électrocatalyseur déposée sur au moins une face de la membrane renforcée.

8. Assemblage d'électrode à membrane comprenant une membrane renforcée selon l'une quelconque des revendications 1 à 6.

9. Ensemble d'électrode à membrane comprenant une membrane renforcée revêtue d'un catalyseur selon la revendication 7.

10. Pile à combustible comprenant une membrane renforcée selon l'une quelconque des revendications 1 à 6, une membrane renforcée revêtue d'un catalyseur selon la revendication 7 ou un ensemble d'électrode à membrane selon l'une quelconque des revendications 8 et 9.

11. Électrolyseur comprenant une membrane renforcée selon l'une quelconque des revendications 1 à 6, une membrane renforcée revêtue d'un catalyseur selon la revendication 7 ou un ensemble d'électrode à membrane selon l'une quelconque des revendications 8 et 9.
